# EUROPEAN PATENT SPECIFICATION

(11) **EP 1 444 166 B1**
(45) Date of publication and mention of the grant of the patent: **05.09.2007**
(21) Application number: 02763122.5
(22) Date of filing: 26.09.2002
(51) Int. Cl.: C01C 1/02, C01B 17/90, C01C 1/242

(54) **CHEMICAL AND THERMAL DECOMPOSITION OF AMMONIUM SULPHATE INTO AMMONIA AND SULPHURIC ACID**
CHEMISCHE UND THERMISCHE ZERSETZUNG VON AMMONIUMSULFAT ZU AMMONIAK UND SCHWEFELSÄURE
DECOMPOSITION PAR VOIE CHIMIQUE ET THERMIQUE DU SULFATE D'AMMONIUM EN AMMONIAC ET ACIDE SULFURIQUE

(30) Priority: 27.09.2001 NO 20014699
(43) Date of publication of application: 11.08.2004
(73) Proprietor: Silica Tech ANS, 1313 Voyenenga (NO)
(72) Inventor: HANSEN, Tord, N-1395 Hvalstad (NO)
(74) Representative: Bergentall, Annika Maria
(86) International application number: PCT/NO2002/000344
(87) International publication number: WO 2003/027018

(56) References cited:
- DE-B- 1 151 492
- DE-B- 1 160 421
- CHEMICAL ABSTRACTS, vol. 65, 1966, Columbus, Ohio, US; abstract no. 13198F, MARGULIS E.V. ET AL.: 'Thermal decomposition of ammonium sulfate in the (NH4)-S04-H2-S04 system' XP002977337 & ZH. NEORGAN. KHIM. vol. 11, no. 7, 1966, pages 1673 - 1678

## Description

### Description of invention

The present invention relates to a method for decomposition of ammonium sulphate ((NH4)2S04 into ammonia (NH3) and sulphuric acid (H2S04) by chemical and thermal treatment.

Ammonium sulphate falls out as a by-product from several differerent chemical processes. Ammonium sulphate was earlier used as a fertilizer component, but is later substituted by ammonium nitrate for this purpose. Ammonium sulphate is still to a certain extent used as a fertilizer component in some developing countries. However is ammonium sulphate in most processing cases considered to be an undesired by-product with limited marketing possibilities.

Ammoniumsulphate is a water soluble crystalline product with a melting point at 235°C. At temperatures above 280°C ammonium sulphate decomposes into ammonia, sulphur trioxide and nitrogenous gases.

Within the different process combinations where ammonium sulphate is formed, are sulphuric acid and ammonia in most cases involved as input materials. Under these conditions there will be favorable both of environmental and economical reasons, to decompose ammoniumsulpate into ammonia and sulphuric acid in order to recirculate the input materials of the process, or to obtain saleable products.

There are a some known methodes concerning decomposition of ammonium sulphate descibed in the following documents:
(1) Chemical Abstracts, Vol 65 (1966), Acc.Nr. 70990, Zh. Neorgan.Chim.,1966, 11 (7), 1673-8 (Russia)
(2) DE 1151492
(3) DE 1160421

The above listed documents describes methodes where ammonium sulphate by thermal treatment and complete decomposition forms gases of NH3, H20 and S03/S02 at temperatures above 350°C. The german patent publications describes further a process involving coke, coal or charcoal as reduction materials under oxygen free conditions where it is achieved to obtain S02 based sulpuric acid in water solution and where ammonia is seperated out in a circuit with ammoniumhydrogen sulphate and potassium sulphate.

The present invention concerns a method for manufacturing of ammonia gas (NH3) and sulphuric acid (H2S04) characterized wherein ammonium sulphate ((NH4)2S04) is mixed with concentrated sulphuric acid, and by heating the mixture to a temperature above 235°C, whereby ammonium sulphate is melted, and thereafter by heating the mixture to above 280°C but below the boiling point of concentrated sulphuric acid (290°C-320°), by which ammonium sulphate is decomposed into ammonia gas and sulphuric acid liquid simultanously, and where the produced sulphuric acid during the reaction time is mixed ideally with the concentrated sulphuric acid from the initial basis mixture.
By this method it is achieved to decompose ammonium sulphate to a fully extent into ammonia gas and sulphuric acid liquid , where the ammonia gas during processing is evaporated and separated out from a restsolution consisting of sulphuric acid.

An example of manufacturing proceedure is given as follows.

### Example

The basis material consisting of 3-5 mm0 crystalline ammonium sulphate, is mixed with 95-97% concentrated sulphuric acid in a reactor at a weight ratio of ammonium sulphate/sulphuric acid = 1/2 .

The reactor is heated up to approx. 250°C whereby ammonium sulphate melts out in a separate liquid phase above the concentrated sulphuric acid. The reactor is thereafter heated upto 285°C whereby ammonium sulphate is decomposed. During decomposition of ammonium sulphate, the ammonia gas formed is evacuated out at the top of the reactor and thereafter cooled down and stored in a seperate tank. The rest product from the decomposition consisting of concentratrd sulphuric acid mixes ideally with the initial sulphuric acid from the basis mixture. After completed reaction, corresponding to approx. 1 hour, the sulphuric acid in the reactor is transfered to a separete intermediate tank for delution with a limited amount of water in order to regulate the acid concentration to about 95-97%. The produced amount of sulphuric acid from the ammonium sulphate decomposition is then transfered to a separate storage tank, while the remaining part of the sulpuric acid is cooled down to about 250°C and thereafter circulated back to the reactor in a repeating production cycle for decomposition of new ammonium sulphate rawmaterial.

### Additional comments to known methodes

The present invention differs from known methodes by which ammonium sulphate in crystal form is melted in a liquid consisting of concentrated sulphuric acid (95-97%) at a temperature of approx. 250°C, i.e. above the melting point of ammonium sulphate corresponding to 235°C. The melted ammonium sulphate is then floating as a separate layer upon the underlying concentrated sulphuric acid. By raising the temperature to 285°C, i.e. above the temperature of ammonium sulphate decomposition corresponding to 280°C, but below the boiling point of concentrated sulpuric acid corresponding to 290°C- 320°C, it is then achieved to evaporate ammonia gas (NH3) separatly while the rest part of the ammonium sulphate consisting of 100% concentrated sulphuric acid (H2S04) is mixed ideally with the concentrated sulphuric acid from the initial basis mixture. It is hereby achieved to decompose ammonium sulphate directly to ammonia gas and sulphuric acid liquid.

This method is of substantial difference from other known methodes where ammonium sulphate first is decomposed to gases consisting of NH3, H20, S03 and subsequent S02, at temperatures above 350°C, and where the mixture of gases by a sequence of following processes are converted to ammonia and sulphuric acid.

## Claims

1. A method for manufacturing of ammonia gas (NH3) and sulphuric acid (H2S04) ***characterized*** wherein ammonium sulphate ((NH4)2S04) is mixed with concentrated sulphuric acid, and by heating the mixture to a temperature above 235°C, whereby ammonium sulphate is melted, and thereafter by heating the mixture to above 280°C but below the boiling point of concentrated sulphuric acid, by which ammonium sulphate is decomposed into ammonia gas and sulphuric acid liquid simultanously, and where the produced sulphuric acid during the reaction time is mixed ideally with the concentrated sulphuric acid from the initial basis mixture.

2. The method of claim 1, ***characterized*** wherein the weight ratio ammonium-sulphate/sulphuric-acid is between approx. 2.0 - 0.1 and where the melting temperature of ammoniumsulphate is kept between approx. 240°C - 270°C and where the decomposition temperature is kept at approx. 285°C.

## Patentansprüche

1. Verfahren zur Herstellung von Ammoniakgas (NH₃) und Schwefelsäure (H₂SO₄), **dadurch gekennzeichnet, daß** Ammoniumsulfat ((NH₄)₂SO₄) mit konzentrierter Schwefelsäure vermischt wird und daß die Mischung auf eine Temperatur von mehr als 235°C erwärmt wird, wodurch Ammoniumsulfat geschmolzen wird, und daß anschließend die Mischung auf eine Temperatur von über 280°C, aber unterhalb des Siedepunkts von konzentrierter Schwefelsäure erwärmt wird, wodurch Ammoniumsulfat simultan in Ammoniakgas und flüssige Schwefelsäure zersetzt wird, und worin die im Verlauf der Reaktionsdauer hergestellte Schwefelsäure idealerweise mit der konzentrierten Schwefelsäure aus der anfänglichen Grundmischung vermischt wird.

2. Verfahren gemäß Anspruch 1, **dadurch gekennzeichnet, daß** das Gewichtsverhältnis von Ammoniumsulfat/Schwefelsäure zwischen ungefähr 2,0 und 0,1 ist und daß die Schmelztemperatur von Ammoniumsulfat zwischen ungefähr 240 und 270°C gehalten wird und daß die Zersetzungstemperatur bei ungefähr 285°C gehalten wird.

## Revendications

1. Procédé pour la production de gaz ammoniac (NH₃) et d'acide sulfurique (H₂SO₄), **caractérisé en ce que** du sulfate d' ammonium ((NH₄)₂SO₄) est mélangé à de l'acide sulfurique concentré, puis le mélange est chauffé à une température supérieure à 235°C, ce qui provoque la fusion du sulfate d'ammonium, et le mélange est ensuite chauffé à une température supérieure à 280°C mais inférieure au point d'ébullition de l'acide sulfurique concentré, ce qui provoque la décomposition du sulfate d'ammonium en gaz ammoniac et acide sulfurique liquide simultanément, l'acide sulfurique produit au cours du temps de réaction étant mélangé de manière idéale à l'acide sulfurique concentré provenant du mélange de base initial.

2. Procédé suivant la revendication 1, **caractérisé en ce que** le rapport pondéral sulfate d'ammonium/acide sulfurique est d'approximativement 2,0 à 0,1, et **en ce que** la température de fusion du sulfate d'ammonium est maintenue dans l'intervalle d'approximativement 240°C à 270°C, et **en ce que** la température de décomposition est maintenue approximativement à 285°C.
